# FASCICULE DE BREVET EUROPEEN

(11) **EP 0 656 682 B1**
(45) Date de publication et mention de la délivrance du brevet: **08.10.1997**
(21) Numéro de dépôt: 94402722.6
(22) Date de dépôt: 29.11.1994
(51) Int. Cl.: H02M 5/257

(54) **Variateur de tension associable au sein d'un groupe constitué d'un maître et d'au moins un esclave, à chaînage isolé galvaniquement**
In einer Gruppe bestehend aus einem Master und mindestens einem sklave, Dimmerschaltung mit einer galvanischen Trennung
Dimmer module used with a master and at least a slave, with a galvanic isolation

(30) Priorité: 03.12.1993 FR 9314512
(43) Date de publication de la demande: 07.06.1995
(73) Titulaire: LEGRAND, F-87000 Limoges (FR); LEGRAND SNC, F-87000 Limoges (FR)
(72) Inventeur: Duchemin, Alain, F-87920 Condat-sur-Vienne (FR)
(74) Mandataire: CABINET BONNET-THIRION

(56) Documents cités:
- EP-A- 0 562 985
- US-A- 4 928 055
- US-A- 5 068 576

## Description

L'invention se rapporte à un variateur de tension à intercaler entre un réseau à tension alternative et une charge et associable au sein d'un groupe où un maître impose son réglage à au moins un esclave via une ligne de chaînage qui les interconnecte, le variateur comportant un commutateur statique à conduction déclenchée amorcé par une impulsion de commande avec un retard réglé sur l'origine de demi-période de réseau, un pilote, neutralisé lorsque le variateur est esclave, délivrant à un moyen de connexion à la ligne de chaînage des signaux-bornes séparés par un intervalle de temps ajusté pour définir le retard réglé et un temporisateur sensible aux signaux-bornes sur le moyen de connexion pour enregistrer en mémoire l'intervalle de temps qui les sépare, et lancé par le passage à zéro de la tension de réseau appliquée au variateur pour délivrer au commutateur statique une impulsion de commande à la fin de l'intervalle enregistré.

En soi, les variateurs de tension à commutateur statique à conduction déclenchée sont bien connus. A partir d'une certaine puissance à commander sur des charges divisibles, on préfère généralement, plutôt que de prévoir un variateur capable d'alimenter toute la charge, utiliser une pluralité de variateurs desservant chacun une division de la charge. Cette disposition est plus souple, et permet notamment de modifier l'installation pour faire face à un accroissement de charge sans avoir à surdimensionner le variateur d'origine.

Dans le cas d'une pluralité de variateurs, il est bien entendu possible de régler chaque variateur indépendamment. Mais le plus fréquemment, on recherche une commande centralisée. Dans ce but, généralement, un variateur fonctionne en variateur maître qui commande son commutateur statique, et envoie à un ou plusieurs variateurs esclaves, par une ligne de chaînage, des signaux propres à assurer l'amorçage à l'instant voulu des commutateurs statiques des variateurs esclaves.

Lorsque les variateurs sont tous alimentés par la même tension avec la même phase, on peut envoyer sur la ligne de chaînage une impulsion pilote synchrone de l'impulsion de commande du variateur maître, les variateurs esclaves exécutant alors une simple mise en forme de l'impulsion pilote pour créer l'impulsion de commande.

Toutefois, lorsque la puissance à commander est relativement importante, il est plus indiqué de répartir les variateurs sur les différentes phases d'un réseau polyphasé, pour réduire l'intensité globale et donc les sections de conducteur, et d'équilibrer les charges des phases. Mais alors les amorçages des commutateurs statiques ne sont plus synchrones. Le variateur maître définit alors le retard réglé par un circuit pilote indépendamment de l'origine des demi-périodes de réseau et transmet sur la ligne de chaînage ce retard sous la forme d'une paire de signaux-bornes, typiquement des impulsions rectangulaires, qui marquent l'un l'origine et l'autre la terminaison d'un intervalle de temps égal au retard réglé. Les variateurs esclaves enregistrent, à réception des signaux-bornes sur la ligne de chaînage, l'intervalle de temps dans une mémoire associée à un temporisateur ; ce temporisateur est lancé par le passage à zéro de la tension de réseau appliquée au variateur, et émet, après une durée égale à l'intervalle de temps enregistré, une impulsion de commande pour le commutateur statique.

On observera que, dans cette structure, la neutralisation du pilote transforme un variateur maître en variateur esclave ; typiquement, cette neutralisation est obtenue par manoeuvre d'un commutateur monté sur le variateur. On peut donc utiliser, au montage d'une installation, ou lors d'une modification le même type de variateur pour les esclaves et le maître, et choisir le maître au gré des circonstances.

Mais la transmission des signaux-bornes par la ligne de chaînage exige que le potentiel de base des signaux-bornes soit le même pour tous les variateurs, et constitue le potentiel de référence. Sur un réseau polyphasé, seul le neutre peut constituer un tel potentiel de référence. Il faut donc que la borne d'entrée de courant principal qui sera reliée au conducteur de neutre représente le potentiel de référence pour chacun des variateurs, maître et esclaves. En corollaire, le conducteur de neutre du réseau constituera le conducteur de retour de la ligne de chaînage.

Cela présente un double inconvénient : d'une part, le montage de chaque variateur exige un repérage soigné des conducteurs principaux, le conducteur de neutre surtout, ce repérage du conducteur de neutre pouvant être particulièrement ardu dans le cas de reprise d'une installation ancienne ; d'autre part, le conducteur de neutre assure le retour, non seulement des signaux-bornes, mais également des courants traversant les variateurs et leurs charges.

Or l'impédance d'un conducteur de neutre n'est jamais nulle, et les courants de retour relativement élevés y développent des tensions non négligeables. Certes, lorsque les charges sont équilibrées entre les phases, le courant moyen dans le conducteur de neutre est nul. Mais cela n'est vrai que pour les tronçons de conducteurs de neutre sur lesquels les courants de retour sont équilibrés ; et, de surcroît, les surintensités d'amorçage donnent lieu à des tensions transitoires non compensées, qui se superposent aux signaux-bornes sur la ligne de chaînage. Aussi est-il déconseillé d'associer plus de trois variateurs esclaves à un variateur maître. En outre, pour éviter des phénomènes de battements résultant de la superposition des signaux-bornes et des transitoires d'amorçage sur la ligne de chaînage, l'émission des signaux-bornes est synchronisée sur le passage à zéro de la tension appliquée au variateur choisi comme maître. Et, bien entendu, l'amplitude des signaux-bornes doit être suffisante pour n'être pas confondue par l'appareillage avec les transitoires d'amorçage.

Pour s'affranchir de ces inconvénients, l'invention propose un variateur de tension, à intercaler entre un réseau à tension alternative et une charge, et associable au sein d'un groupe de variateurs où un maître impose son réglage à au moins un esclave via une ligne de chaînage, le variateur comportant :
un commutateur statique à conduction déclenchée amorcé par une impulsion de commande avec un retard réglé sur l'origine de demi-périodes du réseau ;
un pilote, neutralisé lorsque le variateur est esclave, délivrant à un moyen de connexion à la ligne de chaînage des signaux-bornes séparés par un intervalle de temps ajusté correspondant au retard réglé ;
et un temporisateur, sensible aux signaux-bornes sur le moyen de connexion pour enregistrer dans une mémoire l'intervalle de temps qui sépare les signaux-bornes, et lancé par le passage à zéro de la tension de réseau appliquée au variateur pour délivrer au commutateur statique une impulsion de commande à la fin de l'intervalle enregistré ;
caractérisé en ce que le pilote comprend un oscillateur à fréquence porteuse modulée par les signaux-bornes, tandis que le temporisateur comprend un détecteur pour rétablir des signaux-bornes à partir de la fréquence porteuse modulée, le moyen de connexion étant constitué d'un transformateur adapté à la fréquence porteuse, avec un enroulement isolé du variateur et branché sur la ligne de chaînage, alors bifilaire.

La ligne de chaînage est ainsi isolée galvaniquement des variateurs, de sorte que leur sens de branchement entre phase et neutre devient indifférent ; en outre, étant distincte du conducteur de neutre, cette chaîne est insensible aux courants de retour et tensions transitoires qui se développent dans le conducteur de neutre ; de plus, étant bifilaire, la ligne de chaînage reçoit par capacité sur ses deux conducteurs des tensions parasites éventuelles sensiblement égales, qui se compensent sur l'enroulement de transformateur qui reçoit la modulation à fréquence porteuse des signaux-bornes. Il devient possible de commander nettement plus de variateurs esclaves à partir d'un seul maître.

De préférence, le variateur comporte un microprocesseur programmé pour coordonner les opérations du pilote et du temporisateur. On comprend que le fonctionnement du variateur exige une pluralité de fonctions logiques, plus aisément réalisables et adaptables en logique programmée qu'en logique câblée.

Ainsi le variateur pourra comprendre des moyens manuels pour composer un signal numérique représentatif d'un retard d'amorçage imposé, ainsi que des bornes de liaison à des commandes à distance pour modifier ce signal numérique.

De préférence, le pilote comporte des moyens pour émettre des signaux-bornes constitués d'une paire d'impulsions de durée distincte, et le temporisateur comporte des moyens associés à sa mémoire pour discriminer les impulsions par leur durée pour l'enregistrement de l'intervalle de temps ajusté. On conçoit que l'émission des signaux-bornes par paires successives fait apparaître deux intervalles de temps complémentaires ; la discrimination de l'impulsion d'origine de l'impulsion de fin d'intervalle lève l'ambiguïté de la durée d'intervalle à prendre en compte et permet de ne tenir compte que de l'intervalle significatif.

En disposition préférée, le pilote comprend des moyens de mémorisation de l'intervalle de temps ajusté, et des moyens sensibles aux variations du contenu des moyens de mémorisation pour déclencher en réponse l'émission de paires de signaux-bornes, séparés par un intervalle de temps correspondant au contenu modifié du moyen de mémorisation.

Cette disposition, où les signaux-bornes ne sont émis que pour modifier le retard d'amorçage, met à profit le fait que, selon l'invention, la ligne de chaînage isolée galvaniquement est à l'abri de signaux parasites susceptibles d'interférer avec les signaux-bornes, et de provoquer des amorçages à contretemps, dès lors que des signaux-bornes ne sont pas présents à chaque demi-alternance, avec une amplitude suffisante pour dominer les parasites. Mais alors, comme le variateur maître n'émet de signaux-bornes qu'en réponse à une commande de variation du retard réglé, en l'absence de telles commandes le pilote est pratiquement neutralisé, le variateur maître se trouve en position d'esclave, qui obéirait à un variateur mis en position de maître. Il devient concevable qu'un certain nombre de variateurs dans un groupe, ou même la totalité, puisse agir en maître pour tout le groupe, en modifiant l'état des commandes de son pilote.

Il va de soi qu'il peut être dans certains cas sans intérêt, et parfois même nuisible de commander un groupe de variateurs par n'importe lequel des variateurs. Mais cette capacité d'action procure une grande souplesse aux installations, dont on peut changer les modes de commande aisément, sans aucune modification de câblage.

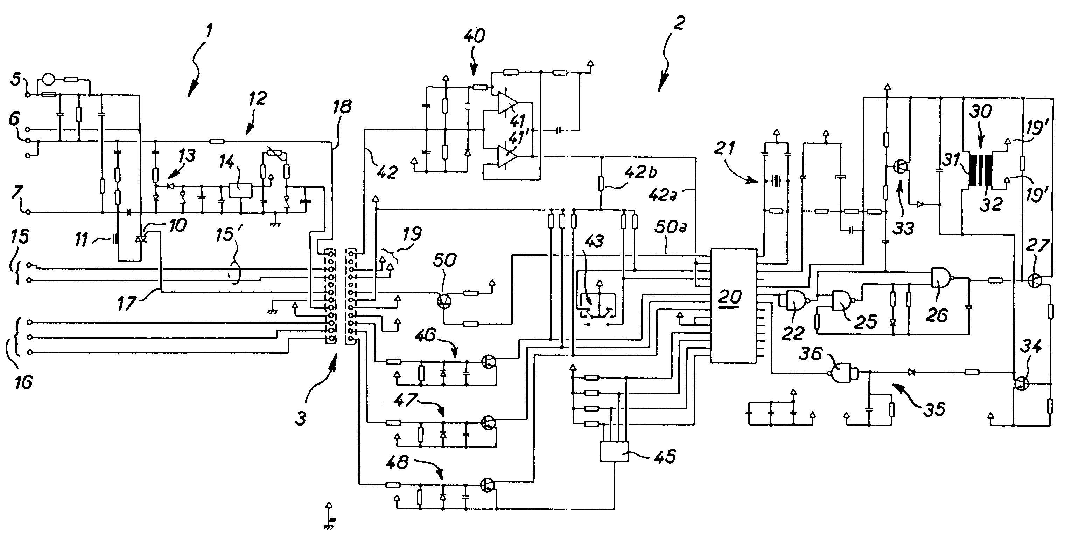

Des caractéristiques secondaires et d'autres avantages ressortiront d'ailleurs de la description qui va suivre à titre d'exemple en référence à la figure unique annexée, qui est un schéma d'un variateur selon l'invention.

Selon le mode de réalisation choisi et représenté sur cette figure, un variateur selon l'invention comprend un module de puissance 1 dans son ensemble, et un module de commande 2 dans son ensemble, reliés par un connecteur 3.

Le module de puissance 1 est branché sur le réseau de distribution entre une borne 5, qui constitue le potentiel de référence pour le variateur, et une borne 6, et la charge à commander sera branchée entre la borne 6, et une borne de sortie 7. Ce module 1 comporte un triac 10 monté en série avec une inductance 11 entre la borne d'entrée 5 à la référence et la sortie 7. Associés à l'inductance 11 pour réduire les transitoires d'amorçage, sont disposés des condensateurs et résistance d'amortissement classiques. Le module de puissance comporte en outre un circuit d'alimentation en continu 12, avec un redresseur 13 disposé, à travers une capacité, entre les bornes 5 et 6, et un circuit intégré 14 régulateur de tension ; le circuit 12 est prévu pour alimenter le module de commande.

Par ailleurs, la gâchette du triac 10 recevra des impulsions de commande du module de commande 2 par une ligne 17 venant du connecteur 3 ; la borne 6 est reliée, à travers une résistance de forte valeur, à une ligne 18 aboutissant au connecteur 3 pour fournir au module de commande 2 une tension de synchronisation en phase avec la tension entre les bornes 5 et 6.

Accessoirement, sur le bornier de connexion du module de puissance (à gauche de la figure) qui comporte les bornes 5 à 7 déjà citées, se présente une paire 15 de bornes pour la liaison avec une ligne de chaînage, et trois bornes 16 de commande à distance ; ces bornes 15 et 16 sont reliées directement au connecteur 3, et leurs fonctions seront explicitées plus loin.

Le module de commande 2 est organisé autour d'un microprocesseur 20 type MC68HC705P9 auquel est associé un quartz d'horloge à 3,9 MHz 21. Une première fonction du microprocesseur 20, est une fonction de pilote, par laquelle il élabore des paires de signaux-bornes pour définir un retard d'amorçage du triac, retard qui peut théoriquement varier de 0 à 10 ms pour un secteur à 50 périodes par seconde, soit une demi-période, et en fait ne dépasse jamais 8 à 9 ms pour conserver une durée tampon et ne pas passer brutalement d'une extinction à un rallumage à pleine puissance sur un raccourcissement de la période du réseau.

Les signaux-bornes sont constitués par une paire d'impulsions de durées distinctes (par exemple dans le rapport 1 à 2), l'une fixant l'origine et l'autre le terme d'un intervalle de temps correspondant au retard voulu. Cet intervalle correspond à un nombre donné d'impulsions de rythme du microprocesseur dérivées de l'horloge à quartz 21, ce nombre étant enregistré en mémoire dans le microprocesseur 20. On verra plus loin comment ce nombre peut être enregistré et modifié. Par ailleurs, les signaux-bornes d'origine et de terme ont des durées distinctes pour être identifiables, afin d'éviter que soit confondu l'intervalle entre l'origine et le terme, et l'intervalle entre un terme et l'origine de la paire suivante. Lorsque le pilote est en action, le nombre enregistré en mémoire est chargé dans un compteur, l'impulsion borne d'origine est émise par le microprocesseur, en direction d'une porte NON-ET 22, tandis que le compteur décompte les impulsions de rythme. Lorsque le contenu du compteur est nul, l'impulsion borne de terme est envoyée à la porte NON-ET 22, et le cycle peut reprendre.

On précise dès maintenant que le pilote peut être neutralisé, pour un fonctionnement en esclave du variateur.

La porte NON-ET 22 constitue tampon entre le microprocesseur 20 et une paire de portes NON-ET 25 et 26, couplées pour constituer un multivibrateur avec une fréquence propre choisie pour minimiser les risques d'interférences avec d'autres appareillages. Par exemple, la fréquence peut se situer, au-delà de la gamme audio, et en deçà de la gamme de radiodiffusion. Les signaux ou impulsions bornes transmis par la porte 22 débloquent le multivibrateur 25, 26 pour moduler en tout ou rien la fréquence propre du multivibrateur, celle-ci devenant une fréquence porteuse pour les signaux-bornes.

La fréquence porteuse, modulée, est amplifiée en puissance par les transistors 27 et 34 pour être appliquée à un premier enroulement 31 d'un transformateur 30, dont la bande passante est adaptée à la fréquence porteuse. Par adaptation à la fréquence porteuse il faut entendre, non que le transformateur 30 constitue un filtre passe-bande sélectif, mais que le transformateur a été conçu de dimensions suffisantes pour que la porteuse et ses bandes latérales de modulation soient convenablement transmises, sans que toutefois la bande passante vers les fréquences basses soit inutilement étendue, et que les dispositions du noyau et des enroulements soient compliquées pour étendre la bande passante vers les fréquences élevées au-delà du nécessaire.

Le transformateur 30 possède un second enroulement 32, qui est isolé galvaniquement du variateur. Les extrémités 19' de l'enroulement 32 aboutissent en 19 sur le connecteur 3 (pour éviter de surcharger le schéma, les liaisons 19-19' ne sont pas représentées). Comme il a été décrit précédemment, la ligne 19 du module de commande 2 est reliée à une ligne 15' dans le module de puissance. Cette ligne 15' aboutit à des bornes 15 qui seront reliées à une ligne bifilaire dite de chaînage, qui sera connectée aux bornes 15 d'autres variateurs dans un groupe où un variateur sera maître (avec son pilote en action) et les autres esclaves (avec leurs pilotes neutralisés). La ligne de chaînage sera donc galvaniquement "en l'air" par rapport au réseau, et ne verra circuler que la fréquence porteuse modulée par les signaux-bornes, émise par le variateur maître.

L'enroulement 31 est shunté par un transistor 33, destiné à étouffer les oscillations de queue des signaux-bornes modulés. D'autre part, l'enroulement 31 délivre à un circuit de détection 35, composé d'une diode et d'une résistance et un condensateur en parallèle, la fréquence porteuse modulée par les signaux-bornes. On observera que cette fréquence porteuse modulée, présente aux bornes de l'enroulement 31, peut être, soit la porteuse délivrée par le multivibrateur 25, 26 et les transistors 27 et 34, si le variateur est maître, soit une fréquence porteuse modulée provenant d'un variateur maître et acheminée par la ligne de chaînage des variateurs du groupe, aux bornes 15 du module de puissance et, via les lignes 15' et 19-19' à l'enroulement 32 du transformateur 30, si le variateur est esclave.

Le circuit de détection 35 délivre à une porte NON-ET 36 des signaux-bornes reconstitués, et cette porte 36 les transmet au microprocesseur 20, pour la mise en oeuvre d'une deuxième fonction de ce microprocesseur, qui constitue le temporisateur.

Le signal-borne d'origine, distingué par sa durée, lance un comptage d'impulsions de rythme, qui est arrêté par le signal-borne de terme, et le contenu du compteur enregistré en mémoire, l'enregistrement chassant le contenu de mémoire précédent. Par ailleurs, une impulsion de synchronisation, émise par un circuit 40 au passage de la tension appliquée entre les bornes 5 et 6 par la valeur zéro, et adressée au microprocesseur 20 via la ligne 42a déclenche le décomptage du contenu d'un compteur chargé par le contenu de la mémoire de temporisateur, c'est-à-dire le nombre d'impulsions de rythme correspondant à l'intervalle qui sépare les signaux-bornes. En fin de décomptage, le microprocesseur délivre à une ligne 50a une impulsion, qui est amplifiée par un transistor 50 et transmise à travers le connecteur 3 à la ligne 17 reliée à la gâchette du triac 10, qui s'amorce donc avec le retard imposé par le pilote du variateur maître sur l'origine de la demi-période de la tension appliquée au variateur, qu'il soit maître ou esclave, et quelle que soit la phase de cette tension par rapport à la tension appliquée au variateur maître.

Le circuit 40 générateur d'impulsion de synchronisation est constitué classiquement de deux amplificateurs opérationnels 41, 41', montés sans rétroaction avec un gain non limité. Ils sont attaqués, l'un sur son entrée inverseuse, l'autre sur son entrée directe, par la ligne 42, qui reçoit la tension de réseau de l'entrée 6 du module de puissance 1, à travers une résistance via la ligne 18. Les amplificateurs 41 et 41' sont couplés et polarisés de façon que l'un des amplificateurs 41' conduise lorsque la tension sur la ligne 42 est supérieure à une première valeur de seuil positive faible, et que l'autre 41 conduise lorsque la tension de la ligne 42 est inférieure à une valeur de seuil négative symétrique de la première. La résistance 42b est donc parcourue en permanence par un courant, sauf pendant le temps très court où la tension de la ligne 42 est intermédiaire entre les valeurs de seuil positive et négative, de sorte que, sur la ligne 42a apparaît une impulsion positive à cheval dans le temps sur le passage à zéro de la tension sur la borne d'alimentation 6, par rapport à la tension sur la borne 5, formant référence locale de tension.

De ce qui précède, on aura compris que le variateur, avec son module de commande 2 et son module de puissance possède toutes les fonctions qui permettent l'utilisation autonome (auquel cas les bornes 15 de liaison à la ligne de chaînage ne sont pas utilisées), l'utilisation en variateur maître, qui impose à tout le groupe de variateur un retard à l'amorçage déterminé par le nombre mémorisé dans le microprocesseur 20 dans sa fonction pilote activée, et l'utilisation en variateur esclave où la fonction pilote est neutralisée, et où le microprocesseur 20, dans sa fonction temporisateur voit le contenu de sa mémoire de temporisateur commande par des signaux-bornes transmis par fréquence porteuse depuis un variateur maître via la ligne de chaînage 15.

On appréciera que, la ligne de chaînage n'étant liée galvaniquement à aucun des variateurs, et étant reliée aux variateurs par des transformateurs qui ne laissent pratiquement pas passer des tensions alternatives ou transitoires à la fréquence du réseau, la liaison des bornes 5 ou 6 à un neutre ou à une phase, et le fait que les variateurs d'un groupe sont alimentés par des phases distinctes n'apportent aucune perturbation du fonctionnement. En outre, l'isolement galvanique de la ligne de chaînage, et le fait qu'elle est bifilaire la rendent à peu près insensible aux transitoires d'amorçage des triacs, et à des couplages capacitifs avec des sources de parasites.

Le fonctionnement du module de commande 2, tel qu'on vient de l'exposer, et plus précisément de la fonction temporisateur rend manifeste que, en l'absence de signaux-bornes délivrés par la porte NON-ET 36 susceptibles de modifier le contenu de la mémoire de temporisateur, le microprocesseur délivre sur la ligne 50a des impulsions commandant l'amorçage du triac 10, avec un retard sur l'origine des demi-périodes du réseau correspondant au contenu de la mémoire de temporisateur. Autrement dit, la fonction temporisateur n'est influencée de l'extérieur que par les changements du contenu de la mémoire de temporisateur. Ainsi, la fonction pilote n'a d'influence que pour changer la valeur du retard d'amorçage, de sorte que l'émission de signaux-bornes sur la porte NON-ET 22 n'a de raison d'être que si une modification de l'intervalle entre ces signaux intervient. Si un variateur n'émet de signaux-bornes que lorsque le contenu de la mémoire de pilote est modifié, il se comporte en variateur maître lorsqu'il émet des signaux-bornes, et en variateur esclave le reste du temps. Cela ouvre la faculté de constituer des groupes de variateurs où chacun d'entre eux ou plusieurs variateurs du groupe peuvent jouer le rôle de maître.

Le module de commande 2 comporte un commutateur 43 (situé à gauche du microprocesseur sur la figure) manoeuvrable manuellement, relié à deux entrées du microprocesseur, pour neutraliser le pilote (fonctionnement en esclave) ou diversifier l'introduction d'un nombre représentatif du retard à l'amorçage voulu, comme on le verra plus loin.

Le module de commande 2 comporte encore un dispositif à roues codeuses 45 capable de délivrer un nombre à quatre moments binaires, qui correspond à la valeur maximale de retard à l'amorçage toléré, et détermine ainsi le minimum de tension efficace délivrée par le variateur.

En outre, le module de commande comporte trois circuits d'entrée de télécommande 46, 47 et 48 dont les sorties sont reliées à trois entrées du microprocesseur, tandis que les entrées sont relayées sur les bornes 16 du module de puissance. Ces entrées 16 peuvent aboutir à des boutons-poussoirs, avec retour sur la borne 5.

L'entrée 16 correspondant au circuit 46 fonctionne en télérupteur, un appui bref sur le bouton-poussoir alors unique commandant l'allumage ou l'extinction du variateur, et un appui long commandant la réduction ou l'accroissement du retard d'amorçage. Bien entendu, l'extinction du variateur est obtenue par suppression d'impulsions d'amorçage sur la gâchette du triac 10.

Les entrées 16 correspondant aux circuits 47 et 48 demandent deux boutons-poussoirs ; l'un, correspondant au circuit 47, commande l'allumage (appui bref) et l'accroissement de tension par diminution du retard d'amorçage (appui long) ; l'autre, correspondant au circuit 48, commande l'extinction et la réduction de tension.

Le processus de discrimination des appuis brefs et longs, et de variation en croissance ou décroissance du retard d'amorçage est réalisé par une programmation classique en la matière du microprocesseur.

Comme on l'a déjà fait observer, il est possible de disposer plus d'un variateur à volonté maître ou esclave, dès lors que le pilote n'excite le multivibrateur 25-26 par des paires de signaux-bornes qu'en réponse à des variations du contenu de la mémoire de ce pilote, de sorte qu'en l'absence d'émission de signaux-bornes par le variateur, celui-ci reste sensible à des signaux-bornes émis par un autre variateur à travers la ligne de chaînage.

Cette disposition, qui serait intéressante pour certaines applications, notamment en matière d'éclairage, nécessite toutefois des verrouillages pour éviter notamment la concomitance de commandes contraires.

Bien entendu, l'invention n'est pas limitée à l'exemple décrit, mais en embrasse toutes les variantes d'exécution, dans le cadre des revendications.

Ainsi, selon la description ci-dessus, le commutateur statique à conduction déclenchée est typiquement un triac. Il va de soi que des montages à deux thyristors sont également des commutateurs statiques à conduction déclenchée intrinsèque.

Mais en outre, l'homme du métier comprendra qu'il serait fonctionnellement équivalent de réaliser des montages où les organes de puissance seraient des semiconducteurs à conduction commandée, en équipant ces derniers de moyens de pilotage qui délivreraient des signaux de commande d'état passant, et passeraient à l'état actif avec un retard déterminé sur l'origine de chaque demi-période, pour retourner à l'état passif en réponse au passage à zéro de la tension en fin de demi-période. Le signal extérieur qui marquerait l'origine du passage à l'état actif des moyens de pilotage s'identifie à l'impulsion de commande de déclenchement de conduction. Ces moyens de pilotage peuvent être constitués de composants discrets, tels que des bascules, ou encore suppléés par un sous-programme de microprocesseur approprié. Ces montages constituent ainsi des commutateurs statiques à conduction déclenchée extrinsèque. Malgré les complications supplémentaires apportées par de tels commutateurs statiques à conduction déclenchée extrinsèque, ceux-ci peuvent être préférés pour diverses raisons, dont notamment la possibilité de coupure rapide.

## Revendications

1. Variateur de tension, à intercaler entre un réseau (5, 6) à tension alternative et une charge, et associable au sein d'un groupe de variateurs où un maître impose son réglage à au moins un esclave via une ligne de chaînage (15), le variateur comportant :
un commutateur statique (10) à conduction déclenchée amorcé par une impulsion de commande avec un retard réglé sur l'origine de demi-périodes du réseau ;
un pilote, neutralisé lorsque le variateur est esclave, délivrant à un moyen de connexion (30) à la ligne de chaînage des signaux-bornes séparés par un intervalle de temps ajusté correspondant au retard réglé ;
et un temporisateur, sensible aux signaux-bornes sur le moyen de connexion pour enregistrer dans une mémoire l'intervalle de temps qui sépare les signaux-bornes, et lancé par le passage à zéro de la tension de réseau appliquée au variateur pour délivrer au commutateur statique une impulsion de commande à la fin de l'intervalle enregistré ;
caractérisé en ce que le pilote comprend un oscillateur (25, 26) à fréquence porteuse modulée par les signaux-bornes, tandis que le temporisateur comprend un détecteur (35) pour rétablir des signaux-bornes à partir de la fréquence porteuse modulée, le moyen de connexion étant constitué d'un transformateur (30) adapté à la fréquence porteuse, avec un enroulement (32) isolé du variateur et branché sur la ligne de chaînage (15), alors bifilaire.

2. Variateur selon la revendication 1, caractérisé en ce qu'il comporte un microprocesseur (20) programmé pour coordonner les opérations du pilote et du temporisateur.

3. Variateur selon la revendication 2, caractérisé en ce qu'il comprend des moyens (45) à commande manuelle de génération d'un signal numérique représentatif de l'intervalle de temps qui sépare les signaux-bornes, couplés au microprocesseur (20) pour former des signaux-bornes correspondants.

4. Variateur selon la revendication 3, caractérisé en ce qu'il comporte un jeu (16) de bornes de liaison du microprocesseur à des moyens de commande à distance, le microprocesseur étant programmé pour modifier le signal numérique représentatif de l'intervalle séparant les signaux-bornes en réponse à des actions sur les moyens de réglage à distance.

5. Variateur selon une quelconque des revendications 1 à 4, caractérisé en ce que le pilote comprend des signaux-bornes constitués d'une paire d'impulsions de durée distincte, des moyens associés à la mémoire du temporisateur étant prévus pour discriminer les impulsions de la paire par leur durée pour l'enregistrement en mémoire de l'intervalle de temps qui les sépare.

6. Variateur selon la revendication 5, caractérisé en ce que le pilote comprend des moyens de mémorisation de l'intervalle de temps ajusté, et des moyens sensibles aux variations du contenu des moyens de mémorisation pour déclencher en réponse l'émission de paires de signaux-bornes séparés par un intervalle de temps correspondant au contenu modifié des moyens de mémorisation.

## Patentansprüche

1. Spannungsregler, der zwischen ein Netz (5, 6) mit Wechselspannung und eine Last einzusetzen ist und in einer Gruppe von Reglern angeordnet werden kann, in der ein Master seine Regelung mindestens einem Slave über eine Verknüpfungsleitung (15) auferlegt, wobei der Regler folgendes aufweist:
einen statischen Umschalter (10) mit ausgelöster Leitung, der durch einen Steuerimpuls mit einer geregelten Verzögerung gegenüber dem Beginn von Halbperioden des Netzes gezündet wird;
ein Führungsorgan, das neutralisiert ist, wenn der Regler Slave ist, und das einem Mittel (30) zur Verbindung mit der Verknüpfungsleitung Begrenzungssignale liefert, die durch ein der geregelten Verzögerung entsprechendes eingestelltes Zeitintervall getrennt sind;
und einen Verzögerer, der für die Begrenzungssignale an der Verbindungseinrichtung empfindlich ist, um in einem Speicher das die Begrenzungssignale trennende Zeitintervall zu speichern, und durch den Nulldurchgang der an den Regler angelegten Netzspannung ausgelöst wird, um dem statischen Umschalter am Ende des aufgezeichneten Intervalls einen Steuerimpuls zu liefern,
dadurch gekennzeichnet, daß das Führungsorgan einen Oszillator (25, 26) mit durch die Begrenzungssignale modulierter Trägerfrequenz aufweist, während der Verzögerer einen Detektor (35) aufweist, um ausgehend von der modulierten Trägerfrequenz Begrenzungssignale wiederzubilden, wobei das Verbindungsmittel aus einem an die Trägerfrequenz angepaßten Transformator (30) mit einer vom Regler getrennten Wicklung (32) besteht, die an die hierbei zweiadrige Verknüpfungsleitung (15) angeschlossen ist.

2. Regler nach Anspruch 1, dadurch gekennzeichnet, daß er einen Mikroprozessor (20) besitzt, der programmiert ist, um die Operationen des Führungsorgans und des Verzögerers zu koordinieren.

3. Regler nach Anspruch 2, dadurch gekennzeichnet, daß er Mittel (45) mit manueller Steuerung zur Erzeugung eines digitalen Signals besitzt, das das die Begrenzungssignale trennende Zeitintervall darstellt, wobei diese Mittel mit dem Mikroprozessor (20) gekoppelt sind, um entsprechende Begrenzungssignale zu bilden.

4. Regler nach Anspruch 3, dadurch gekennzeichnet, daß er einen Satz (16) von Anschlüssen zur Verbindung des Mikroprozessors mit Fernsteuermitteln besitzt, wobei der Mikroprozessor programmiert ist, um das digitale Signal, das das die Begrenzungssignale trennende Intervall darstellt, als Antwort auf Einwirkungen auf die Fernregelmittel zu ändern.

5. Regler nach einem der Ansprüche 1 bis 4, dadurch gekennzeichnet, daß das Führungsorgan Begrenzungssignale aufweist, die aus einem Paar von Impulsen verschiedener Dauer bestehen, wobei dem Speicher des Verzögerers zugeordnete Mittel vorgesehen sind, um die Impulse des Paars für die Aufzeichnung des sie trennenden Zeitintervalls im Speicher durch ihre Dauer zu unterscheiden.

6. Regler nach Anspruch 5, dadurch gekennzeichnet, daß das Führungsorgan Mittel zur Speicherung des eingestellten Zeitintervalls und Mittel aufweist, die für die Änderungen des Inhalts der Speichermittel empfindlich sind, um als Antwort die Sendung von Paaren von Begrenzungssignalen auszulösen, die durch ein Zeitintervall getrennt sind, das dem geänderten Inhalt der Speichermittel entspricht.

## Claims

1. A voltage variator to be interposed between an ac voltage network (5, 6) and a load and associable within a group of variators in which a master imposes its regulation on at least one slave by way of a chaining line (15), the variator comprising:
a static switch (10) with triggered conduction which is switched by a control pulse with a regulated delay in relation to the origin of half-periods of the network;
a pilot means, neutralised when the variator is a slave, delivering to a means (30) for connection to the chaining line limit signals which are separated by an adjusted time interval corresponding to the regulated delay; and
a time delay means responsive to the limit signals on the connecting means for registering in a memory the time interval which separates the limit signals and switched on by the passage through zero of the network voltage applied to the variator to deliver to the static switch a control pulse at the end of the registered interval;
characterised in that the pilot means comprises an oscillator (25, 26) with a carrier frequency which is modulated by the limit signals while the time delay means comprises a detector (35) for reestablishing the limit signals from the modulated carrier frequency, the connecting means being formed by a transformer (30) adapted to the carrier frequency, with a winding (32) isolated from the variator and connected to the chaining line (15) which is then a two-wire line.

2. A variator according to claim 1 characterised in that it comprises a microprocessor (20) programmed to co-ordinate the operations of the pilot means and the time delay means.

3. A variator according to claim 2 characterised in that it comprises manually controlled means (45) for generation of a numerical signal representative of the time interval which separates the limit signals, which are coupled to the microprocessor (20) to form corresponding limit signals.

4. A variator according to claim 3 characterised in that it comprises a set (16) of terminals for connection of the microprocessor to remote control means, the microprocessor being programmed to modify the numerical signal representative of the interval separating the limit signals in response to actions on the remote regulating means.

5. A variator according to any one of claims 1 to 4 characterised in that the pilot means comprises limit signals formed by a pair of pulses of distinct duration, means associated with the memory of the time delay means being provided to discriminate the pulses of the pair by virtue of their duration for memory registration of the time interval which separates them.

6. A variator according to claim 5 characterised in that the pilot means comprises means for memory storage of the adjusted time interval and means responsive to the variations in the content of the memory means for triggering in response emission of pairs of limit signals separated by a time interval corresponding to the modified content of the memory means.
